# EUROPÄISCHE PATENTSCHRIFT

(11) **EP 0 525 371 B1**
(45) Veröffentlichungstag und Bekanntmachung des Hinweises auf die Patenterteilung: **02.11.1995**
(21) Anmeldenummer: 92110384.2
(22) Anmeldetag: 19.06.1992
(51) Int. Cl.: F16L 27/08, B23Q 1/00, F16J 15/44

(54) **Einrichtung zur Übertragung eines Mediums**
Transfer arrangement for a medium
Dispositif pour transférer un milieu

(30) Priorität: 20.07.1991 DE 4124153
(43) Veröffentlichungstag der Anmeldung: 03.02.1993
(73) Patentinhaber: SMW-Autoblok Spannsysteme GmbH, 88070 Meckenbeuren (DE)
(72) Erfinder: Hiestand, Karl, W-7798 Pfullendorf (DE); Hiestand, Thomas, W-7798 Pfullendorf (DE)
(74) Vertreter: Engelhardt, Guido, Dipl.-Ing.

(56) Entgegenhaltungen:
- WO-A-90/02289
- DE-A- 1 926 162
- DE-A- 3 011 312
- US-A- 2 985 468

## Beschreibung

Die Erfindung bezieht sich auf eine Einrichtung zur Übertragung eines Mediums aus einem ortsfest angeordneten ersten Bauteil in ein in diesem eingesetztes rotierend antreibbares zweites Bauteil, wobei zwischen den beiden Bauteilen eine Ringkammer, an die eine Zuführungsleitung sowie eine zu einem Verbraucher führende Leitung für das zu übertragende Medium angeschlossen sind, und beiderseits der Ringkammer jeweils ein radial gerichteter Dichtspalt vorgesehen ist. Die Einrichtung ist insbesondere zur Überführung eines Druckmittels von einem Drehverteiler in einen Hohlspannzylinder verwendbar.

Bei Druckmittelzuführungen dieser Art (doppelt wirkende Gleitringdichtungen der Firma Busak und Luyken) sind die Dichtspalte, um den Austritt des Druckmittels zwischen den relativ zueinander verdrehbaren Bauteilen gering zu halten, jeweils durch das ortsfest angeordnete Bauteil sowie gesonderte metallische Dichtringe eingeschlossen, die durch die Kraft von Federn an das ortsfeste Bauteil gepreßt werden.

Auf diese Weise ist zwar eine Gleitringdichtung geschaffen, die Dichtspaltbreite ist aber nicht, um zur Abführung der sich an den aneinander reibenden Bauteilen aufstauenden Wärmeenergie eine bestimmte Menge des zu übertragenden Mediums austreten zu lassen, einstellbar. Ein gesonderter Kühlmittelkreislauf ist daher oftmals unumgänglich, damit insbesondere bei hohen Relativdrehzahlen eine Überhitzung vermieden wird. Dennoch sind ein Trockenlauf und die mit diesem verbundenen Folgeerscheinungen vielfach nicht vermeidbar. Des weiteren ist bei dieser Ausgestaltung von Nachteil, daß die beiden Dichtringe nicht miteinander gekoppelt sind und jeweils einzeln an das ortsfeste Bauteil angepreßt werden. Durch die beiden Dichtspalte können somit auch unterschiedliche Mengen des zu übertragenden Mediums abströmen. Trotz des erheblichen Bauaufwandes ist bei Anwendung der bekannten Einrichtung eine zufriedenstellende und betriebssichere Druckmittelübertragung über einen längeren Zeitraum nicht zu bewerkstelligen.

Aufgabe der Erfindung ist es daher, eine Einrichtung zur Übertragung eines Mediums der eingangs genannten Art zu schaffen, die nicht nur eine betriebssichere Mediumübertragung ermöglicht, sondern durch die vor allem gewährleistet ist, daß die beiden Dichtspalte gemeinsam einzustellen und zu verstellen sind, und daß deren Spaltbreite ohne Schwierigkeiten an die jeweiligen Erfordernisse, mitunter selbsttätig, angepaßt werden können. Der Bau- und Konstruktionsaufwand, mittels dem dies zu errreichen ist, soll gering gehalten werden, so daß die Übertragungseinrichtung auch wirtschaftlich hergestellt werden kann, dennoch soll stets eine hohe Zuverlässigkeit der Mediumübertragung bei langer Lebensdauer gegeben sein.

Gemäß der Erfindung wird dies bei der Einrichtung zur Übertragung eines Mediums der vorgenannten Gattung dadurch erreicht, daß die Ringkammer in axialer Richtung auf der einen Seite ganz oder teilweise von dem ersten Bauteil und auf der anderen Seite ganz oder teilweise von dem zweiten Bauteil begrenzt ist, daß die beiden Bauteile jeweils eine in sich starre Baueinheit bilden, und daß der eine Dichtspalt von außen durch das erste Bauteil und von innen durch das zweite Bauteil und der andere Dichtspalt von außen durch das zweite Bauteil und von innen durch das erste Bauteil begrenzt sind, derart, daß beide Dichtspalte durch eine axial gerichtete Relativverstellung der beiden Bauteile zueinander gleichsinnig veränderbar sind, d. h. gleichzeitig geöffnet oder geschlossen werden.

Zur Einstellung der Spaltbreite der beiden Dichtspalte der Ringkammer ist es sehr vorteilhaft, an diese über einen der Dichtspalte eine mit zwei axial einander gegenüberliegende von dem zu übertragenden Medium beaufschlagbare Flächen versehene Regelkammer anzuschließen, die zwischen den beiden Bauteilen angeordnet ist.

Angebracht ist es hierbei, die Regelkammer durch einen radial gerichteten Dichtspalt abzuschließen, der gleichsinnig mit den Dichtspalten der Ringkammer veränderbar ist, diese zwischen zwei an den beiden Bauteilen angeformten radial nach innen und außen abstehenden Ansatzstücken vorzugsweise in Form eines "Z" anzuordnen und an die Regelkammer eine mit einem einstellbaren Absperrglied versehene Auslaßleitung anzuschließen.

Nach einer andersartigen Ausgestaltung kann die Regelkammer auch durch einen axial verstellbaren von dem zu übertragenden Medium beaufschlagbaren Kolben verschlossen sein, der unabhängig von den beiden Bauteilen verstellbar und dessen Verstellweg durch Anschläge begrenzt ist, wobei die Auslaßleitung in Form einer oder mehrerer Drosselbohrungen durch den Kolben hindurchgeführt sein kann und dieser auf der der Regelkammer gegenüberliegenden Seite mit einer von dem abströmenden Medium beaufschlagbaren Druckfläche versehen sein sollte.

Angezeigt ist es des weiteren, die Regelkammer zwischen zwei zur wechselweisen Übertragung eines Mediums vorgesehene Ringkammern anzuordnen, wobei die beiden Ringkammern spiegelbildlich zueinander oder in Reihe hintereinander angeordnet sein können.

Zweckmäßig ist es ferner, die Ringkammer in Form eines "Z" auszubilden und das erste Bauteil mit einem radial nach innen in die Ringkammer ragenden Ansatz, mit dem zur Bildung des einen Dichtspaltes das zweite Bauteil zusammenwirkt, und das zweite Bauteil mit einem radial nach außen gerichteten Ansatz, mit dem zur Bildung des anderen Dichtspaltes das erste Bauteil zusammenwirkt, zu versehen.

Um eine Kompensation der auf die beiden Bauteile durch das zu übertragende Medium ausgeübten axial gerichteten Kräfte ausgleichen und somit ein selbsttätiges Einstellen der Breite der Dichtspalte zu ermöglichen, ist es des weiteren vorteilhaft, wenn einer oder beide der die Ringkammer begrenzenden Ansätze mit einem radial gerichteten Ansatzstück versehen sind.

Nach einer bevorzugten Ausführungsform sollten die in axialer Richtung beaufschlagten Flächen der Ansätze und Ansatzstücke jeweils gleich groß bemessen und auf den gleichen Durchmesserbereichen wie die beiden Dichtspalte angeordnet sein. Es ist aber auch möglich, die beiden Dichtspalte auf unterschiedlichen Durchmesserbereichen anzuordnen und unterschiedlich lang zu bemessen.

Zur selbsttätigen Einstellung der Spaltbreite der beiden Dichtspalte ist es aber auch möglich, das erste Bauteil mit dem zweiten Bauteil über ein zwischen diesen eingesetztes Lager zu verspannen, oder zumindest eines der Bauteile durch eine den axialen Verstellbewegungen entgegenwirkende Feder abzustützen. Zu dem gleichen Zweck kann auch der axiale Verstellweg der beiden Bauteile zueinander durch Anschläge begrenzt werden.

Die Begrenzung des axialen Verstellbereiches durch Anschläge kann in der Weise bewerkstelligt werden, daß einer der Anschläge durch einen in eines der Bauteile innerhalb der Ringkammer eingesetzten Hebel, einen Stift oder dgl. gebildet ist, der mit dem anderen Bauteil, beispielsweise mit dem an diesem angeformten Ansatz, zusammenwirkt, oder daß die Anschläge durch einen an dem einen Bauteil im Bereich der Ringkammer angeformten radial nach innen oder außen abstehenden Vorsprung und einer an dem anderen Bauteil vorgesehene Schulter gebildet sind, die mit einem der maximal einstellbaren Breite der Dichtspalte entsprechenden axialen Abstand zueinander angeordnet sind, wobei zur Erzeugung einer axialen Relativverstellung der beiden Bauteile zueinander die Schulter mit einer seitlich offenen Freisparung versehen sein sollte.

Um eine einfache Bearbeitung und Montage ermöglichen zu können, sollten das erste und/oder das zweite Bauteil ganz oder teilweise aus zwei oder mehreren axial hintereinander angeordneten Scheiben zusammengesetzt sein, die fest, beispielsweise durch Schrauben, miteinander verbunden sind.

Vorteilhaft ist es ferner, einen oder beide Dichtspalte der Ringkammern und/oder den Dichtspalt der Regelkammer zumindest auf einer Seite durch einen an den Bauteilen angebrachten reibfesten Belag, beispielsweise durch in diese eingesetzte Ringe aus einem Keramikwerkstoff, zu begrenzen.

Wird eine Einrichtung zur Übertragung eines Mediums gemäß der Erfindung ausgebildet, so ist es möglich, beide Dichtspalte jeweils gemeinsam zu verändern und deren Spaltbreiten in Abhängigkeit von den jeweiligen Erfordernissen einzustellen, so daß aus der mit Druckmittel beaufschlagten Ringkammer durch die zugeordneten Dichtspalte eine definierte Menge des zu übertragenden Mediums gezielt abströmen kann. Durch die Ausgestaltung der beiden Bauteile im Bereich der Ringkammer ist nämlich die Gewähr gegeben, daß bei einer durch das Medium oder einem Stellglied bedingten axial gerichteten Relativverschiebung der beiden Bauteile zueinander die Dichtspalte gleichsinnig in ihrer Spaltbreite verändert werden, d. h. gleichzeitig geöffnet oder geschlossen werden, und zwar um die jeweils gleiche Wegstrecke. Und da mit Hilfe der des weiteren vorgesehenen Regelkammer und/oder der Dimensionierung der Ringkammer die axial gerichteten Kräfte auf- und abgebaut werden können, können sich die Dichtspalte selbsttätig einstellen.

Eine metallische Reibung zwischen den beiden relativ zueinander verdrehbaren Bauteilen und somit eine mögliche Überhitzung tritt demnach nicht auf, vielmehr ist eine viskose Reibung zwischen den beiden Bauteilen gegeben. Auch wird durch das gesteuert durch die Dichtspalte abströmende Medium eine ausreichende Kühlung bewirkt. Des weiteren werden Maßtoleranzen im Bereich der Dichtspalte bereits nach kurzer Zeit ausgeglichen, da sich die beiden Bauteile gegenseitig einschleifen und die Dichtspalte sich somit aneinander anpassen. Und sind in dem zu übertragenden Druckmedium metallische Fremdkörper, wie z. B. Späne, enthalten, werden die Dichtspalte für eine kurze Zeitspanne gleichmäßig geöffnet, so daß der Fremdkörper abströmen kann, ohne Beschädigungen hervorzurufen. Trotz des geringen Bauaufwandes - lediglich die beiden Bauteile sind bei der einfachen Ausgestaltung zur Bildung der Ringkammer entsprechend zu gestalten - ist dennoch eine äußerst zuverlässige und anpaßbare Mediumübertragung, die selbstverständlich auch aus dem zweiten Bauteil heraus und somit in beiden Strömungsrichtungen möglich ist, über einen langen Zeitraum gewährleistet.

In der Zeichnung sind einige Ausführungsbeispiele der gemäß der Erfindung ausgebildeten Einrichtung zur Übertragung eines Mediums dargestellt, die nachfolgend im einzelnen erläutert sind. Hierbei zeigt, jeweils in einem Axialschnitt:
- Figuren 1, 3, 5 und 7: Übertragungseinrichtungen in geringfügig abgewandelten Ausgestaltungen, in schematischer Darstellung,
- Figuren 2, 4, 6 und 8: die konstruktiven Ausgestaltungen der Einrichtungen nach den Figuren 1, 3, 5 und 7,
- Figuren 9, 9a und 10: eine Übertragungseinrichtung nach den Figuren 1 und 2 mit einer der Ringkammer zugeordneten Regelkammer in schematischer Darstellung und konstruktiver Ausgestaltung,
- Figur 11: eine an einen Spannzylinder angebaute Übertragungseinrichtung mit zwischen den beiden Ringkammern angeordneter Regelkammer,
- Figur 12: eine Übertragungseinrichtung mit andersartig gestalteter zugeordneter Regelkammer, und
- Figur 13: eine mit Anschlägen versehene Ringkammer zur Begrenzung der Relativverschiebung der beiden Bauteile zueinander.

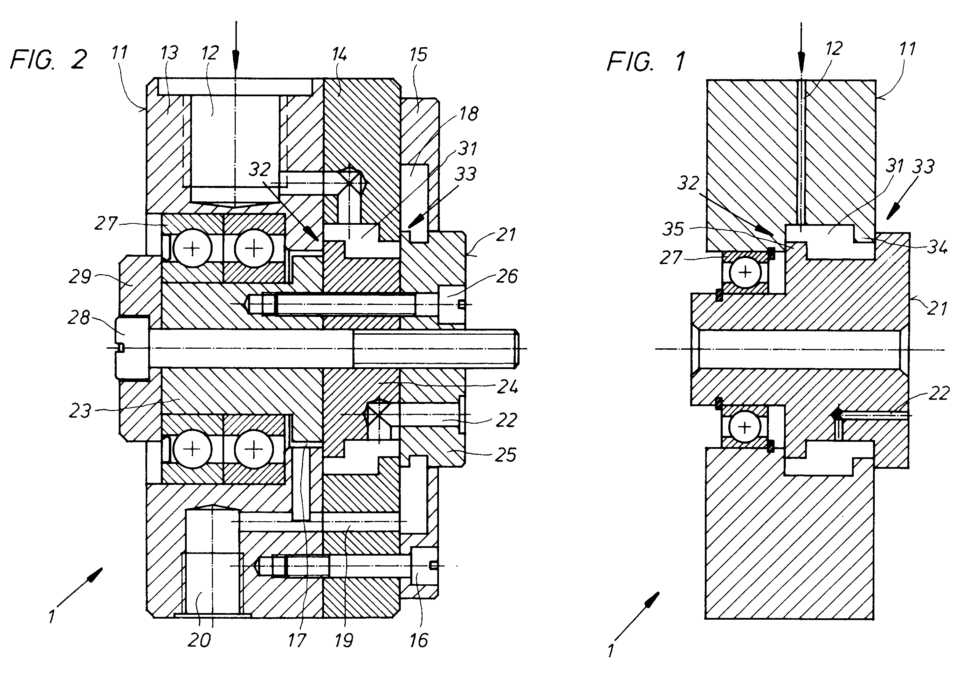

Die in den Figuren 1 bis 8 in unterschiedlichen Ausführungsvarianten dargestellte und jeweils mit 1 bezeichnete Einrichtung dient zur Übertragung eines Mediums aus einem ortsfest angeordneten ersten Bauteil 11 zu einem in dieses eingesetzten zweiten Bauteil 21, das gegenüber dem ersten Bauteil rotierend antreibbar und somit gegenüber diesem relativ verdrehbar ist. Das zu übertragende Medium wird hierbei über eine in dem ersten Bauteil 11 vorgesehene Zuführungsleitung 12 in eine Ringkammer 31 eingebracht, von der es über eine in das zweite Bauteil 21 eingearbeitete Leitung 22 einem nicht gezeigten Verbraucher zuströmen kann.

Zwischen den beiden mittels eines Wälzlagers 27 drehbar aufeinander abgestützten Bauteilen 11 und 21 sind neben der Ringkammer 31 radial gerichtete Dichtspalte 32 und 33 vorgesehen, deren Spaltbreiten bei einer axialen Relativbewegung der beiden Bauteile 11 und 21 zueinander jeweils im gleichen Sinne verstellt, d. h. geöffnet oder geschlossen werden.

Um dies bewerkstelligen zu können, bilden die beiden Bauteile 11 und 21 eine in sich geschlossene Baueinheit. Außerdem werden der Dichtspalt 32 auf der Außenseite jeweils von dem ersten Bauteil 11 und auf der Innenseite von dem zweiten Bauteil 21 und der Dichtspalt 33 auf der Außenseite von dem zweiten Bauteil 21 und auf der Innenseite von dem ersten Bauteil 11 begrenzt. Die beiden Bauteile 11 und 21 sind dazu mit angeformten Ansatzstücken 34 und 35 ausgestattet. Aufgrund dieser Ausgestaltung ist ein gemeinsames Öffnen und Schließen der Dichtspalte 32 und 33 gegeben.

Um die in dieser Weise ausgebildeten Bauteile 11 und 21 auf einfache Weise zusammenbauen zu können, sind diese aus einzelnen Scheiben 13, 14 und 15 bzw. 23, 24 und 25 zusammengesetzt, die durch Schrauben 16 bzw. 26 fest miteinander verbunden sind. In die Scheiben 13 und 15 des ersten Bauteils 11 sind hierbei Auffangkammern 17 und 18 eingearbeitet, in denen das über die Dichtspalte 32 und 33 aus der Ringkammer 31 austretende Medium aufgefangen wird. Über Leitungen 19 und 20 kann dieses Medium in einen Vorratsbehälter zurückgeführt werden.

Bei der Ausgestaltung nach den Figuren 1 und 2 sind die in axialer Richtung beaufschlagten Flächen der beiden in die Bauteile 11 und 21 eingearbeiteten Bereiche der Z-förmig gestalteten Ringkammer 31 jeweils gleich groß bemessen, so daß - bei theoretischer Betrachtungsweise - die beiden auch in axialer Richtung über das Lager 27 aneinander abgestützten Bauteile 11 und 21 bei entsprechender Feinbearbeitung aneinander anliegen müßten und durch die Dichtspalte 32 und 33 kein Medium abströmen dürfte. In der Praxis zeigt sich jedoch, daß das Medium im Bereich der Ringkammer 31 zwischen die beiden Bauteile 11 und 21 kriecht, so daß in den Dichtspalten 32 und 33 ein Druck aufgebaut wird. Und sobald in den Dichtspalten 32 und 33 ein Druck aufgebaut ist, werden diese gemeinsam geöffnet und die beiden Bauteile 11 und 21 werden axial auseinander geschoben.

Um ein vollständiges Öffnen der Dichtspalte 32, 33 zu verhindern, sind die beiden Bauteile 11 und 21 über das Lager 27 miteinander verspannt. Dazu dient eine mit einem nicht dargestellten Verbraucher verbindbare Schraube 28, an der über eine Scheibe 29 das Lager 27 abgestützt ist. Der axiale Verstellweg der beiden Bauteile 11 und 21 zueinander ist somit durch das Spiel in dem Lager 27 begrenzt, die maximale Spaltbreite, die die Dichtspalte 32 und 33 einnehmen können, entspricht demnach dem Spiel des Lagers 27. Selbstverständlich ist es aber auch möglich, auf die beiden Bauteile 11 und/oder 21 in axialer Richtung eine Druckfeder einwirken zu lassen, um der Öffnungskraft durch den sich in den Dichtspalten 32 und 33 aufbauenden Druck mehr oder weniger begegnen zu können.

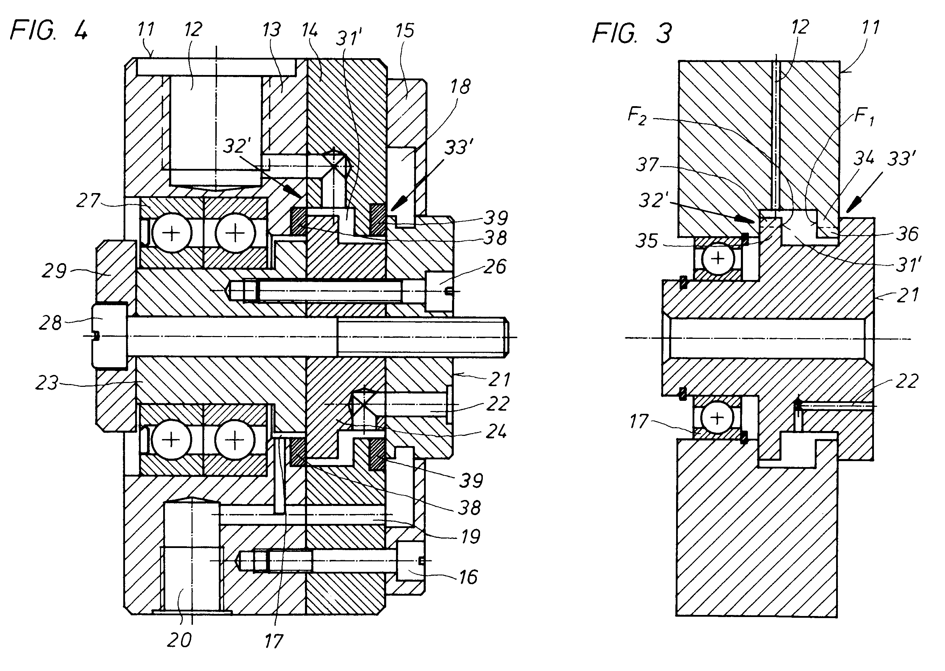

Um die axial gerichteten durch den Druckaufbau in den Dichtspalten 32', 33' bzw. 32'', 33'' bzw. 32''', 33''' hervorgerufenen Kräfte ganz oder teilweise auszugleichen, sind die Ansätze 34 und 35, wie dies in den Figuren 3 bis 8 dargestellt ist, mit unterschiedlich groß bemessenen radial gerichteten Ansatzstücken 36, 37 bzw. 36', 37' bzw. 36'', 37'' versehen, durch die somit zusätzlich axial beaufschlagbare Ringflächen F₁, F₂ bzw. F₁', F₂' bzw. F₁'', F₂'' geschaffen sind. Durch die strichpunktiert in die Schemadarstellungen eingezeichneten Linien sind die Ansatzstücke 36, 37 bzw. 36', 37' bzw. 36'', 37'' besonders gekennzeichnet. Mit Hilfe der Ringflächen F₁', F₂' bzw. F₁', F₂' bzw. F₁'', F₂'' können unterschiedliche entgegengesetzt zueinander gerichtete Kräfte aufgebaut werden, durch die die Bauteile 11 und 21 derart gegeneinander verschoben werden, daß die Spaltbreite der Dichtspalte 32', 33' bzw. 32'', 33'' bzw. 32''', 33''' jeweils mehr oder weniger verkleinert wird.

Bei der Ausgestaltung nach den Figuren 3 und 4 sind die Ringflächen F₁ und F₂ gleich groß bemessen wie die die Dichtspalte 32' und 33' begrenzenden Flächen der Bauteile 11 und 21. Der sich in den Dichtspalten 32' und 33' aufbauende Druck wird somit vollständig kompensiert, so daß kein Medium aus der Ringkammer 31' seitlich abströmt. Außerdem sind hierbei in die Ringe 13 und 14 Scheiben 38 und 39 aus einem Keramikwerkstoff eingesetzt, so daß die Dichtspalte 32' und 33' auf einer Seite durch einen reibfesten Belag begrenzt sind.

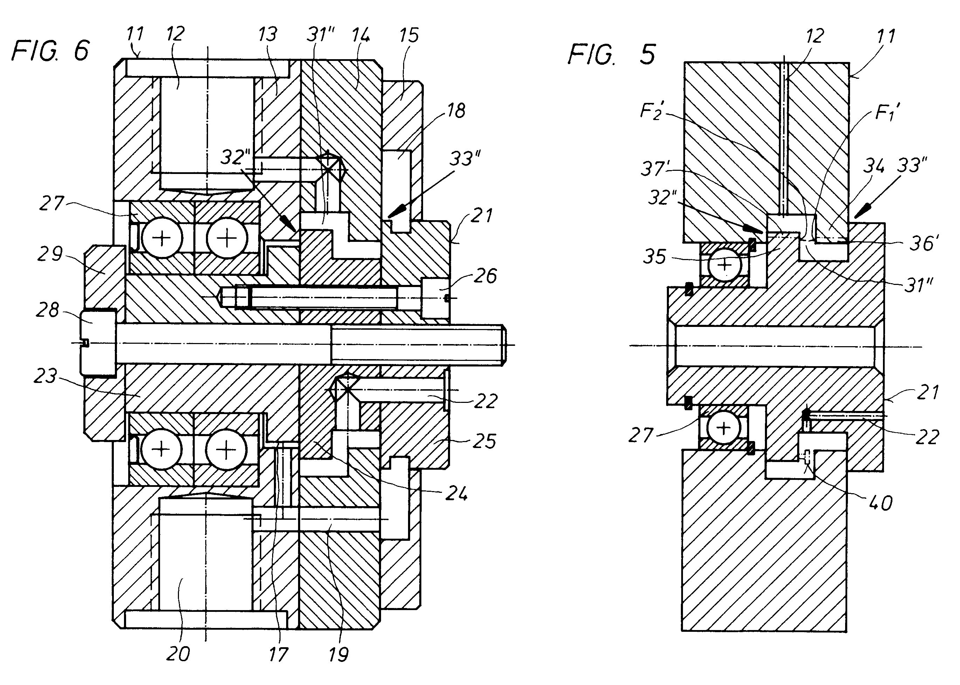

Gemäß den Figuren 5 und 6 sind die Flächen F₁' und F₂' kleiner bemessen als die die Dichtspalte 32'' und 33'' begrenzenden Flächen der Bauteile 11 und 21. Die in den Dichtspalten 32'' und 33'' aufgebauten Druckkräfte werden somit nur zum Teil ausgeglichen, bei der in den Figuren 5 und 6 dargestellten Druckmittelübertragungseinrichtung wird demnach eine definierte Menge des zu übertragenden Mediums seitlich aus der Ringkammer 31'' abströmen.

Um aber dennoch eine maximale Spaltbreite der Dichtspalte 32'', 33'' einhalten zu können, kann, wie dies in Figur 5 strichpunktiert eingezeichnet ist, ein Anschlag vorgesehen sein, der hierbei aus einem in das zweite Bauteil 21 eingesetzten und mit dem Ansatz 34 des ersten Bauteils 1 zusammenwirkenden Hebel 40 besteht.

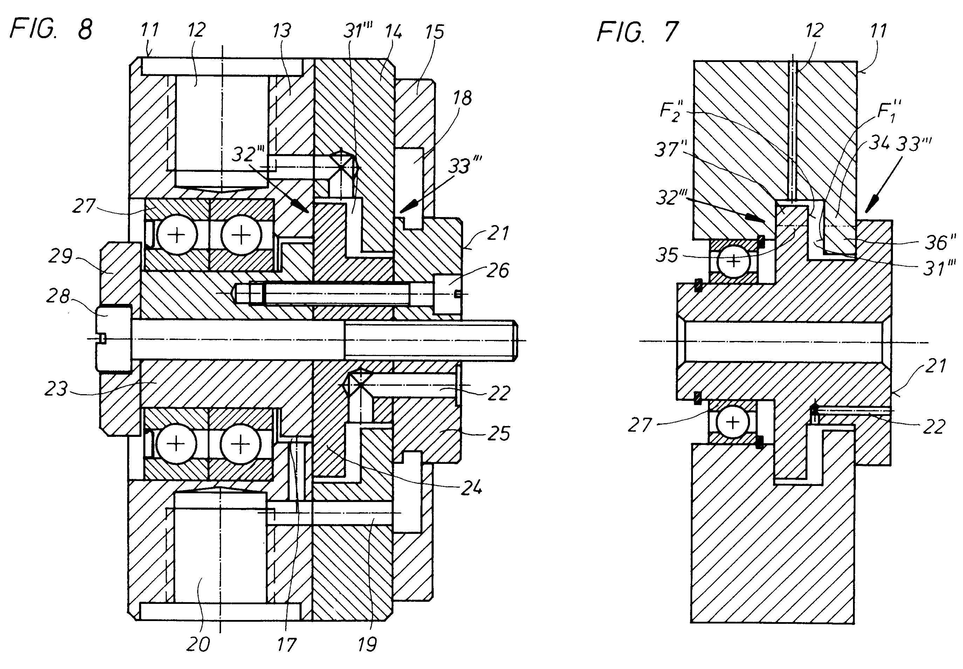

Bei der Ausgestaltung nach den Figuren 7 und 8 werden dagegen die in den Dichtspalten 32''' und 33''' aufgebauten Druckkräfte überkompensiert, aus der Ringkammer 32''' wird daher kein Medium seitlich austreten. Die Ringflächen F₁'' und F₂'' sind nämlich erheblich größer bemessen als die die Dichtspalte 32''' und 33''' begrenzenden Ringflächen der Bauteile 11 und 21, die axial gerichteten, diese auseinanderdrückenden Kräfte sind somit höher als die in den Dichtspalten 32''' und 33''' aufgebauten entgegenwirkenden Druckkräfte.

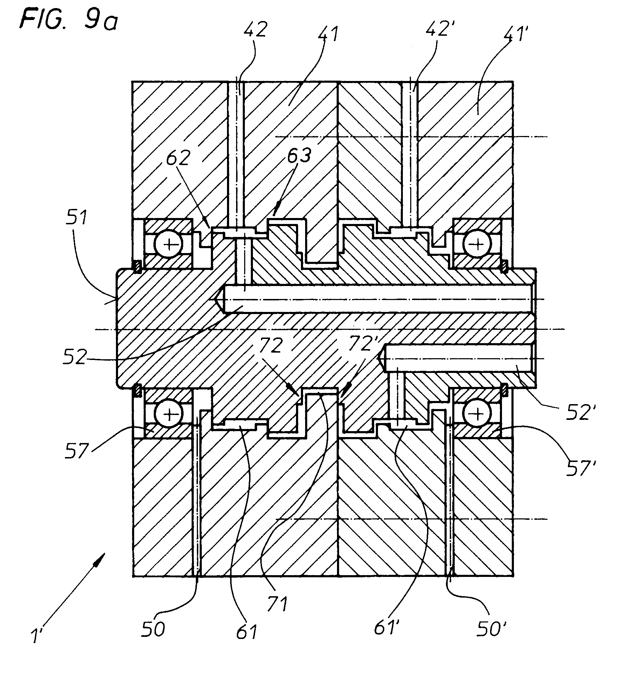

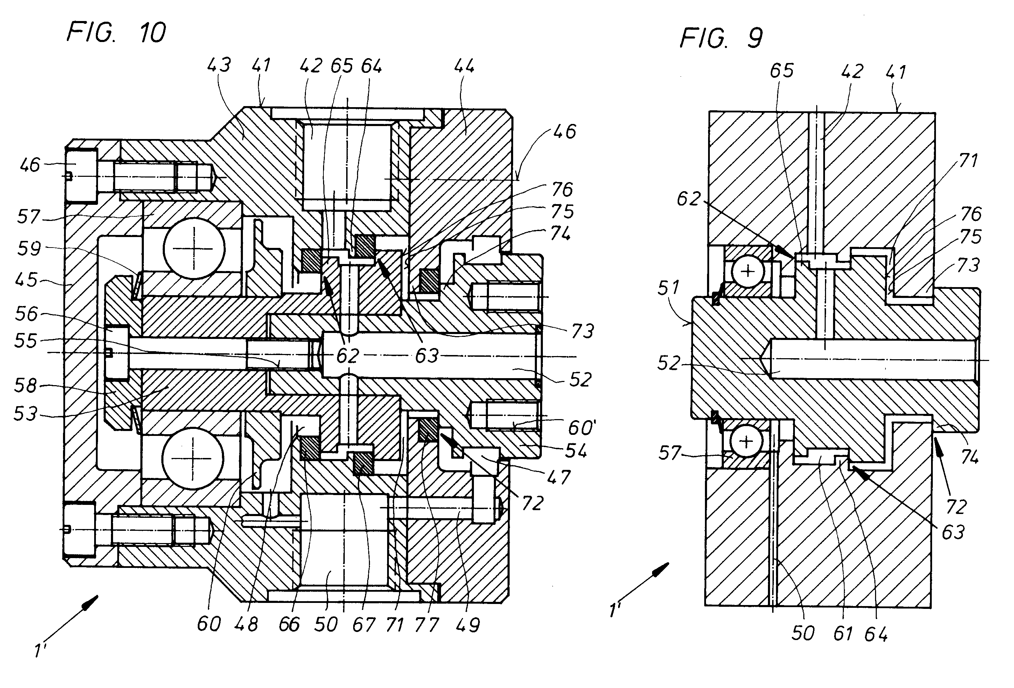

Bei der Einrichtung 1' nach den Figuren 9 und 10 zur Übertragung eines Druckmittels aus einem ortsfest angeordneten ersten Bauteil 41 in ein in dieses eingesetztes rotierend antreibbares zweites Bauteil 51 ist zwischen diesen wiederum eine Ringkammer 61 vorgesehen, der eine Regelkammer 71 nachgeschaltet ist, um ein selbsttätiges gemeinsames Einstellen der Spaltbreiten der Dichtspalte 62 und 63 zu bewerkstelligen. Über eine Leitung 42 wird das Druckmittel der Ringkammer 61 zugeführt, von der es über eine Leitung 52 einem Verbraucher zuströmen kann.

Das erste Bauteil 41 ist aus zwei Teilen 43 und 44 sowie einem Deckel 45 zusammengesetzt, die durch Schrauben 46 fest miteinander verbunden sind. Auch das zweite Bauteil 51 besteht aus zwei Teilen 53 und 54, die mittels einer in eine in das Teil 54 eingearbeiteten Gewindebohrung 55 eingreifenden Schraube 56 zusammengehalten werden.

An der Schraube 56 ist über eine Scheibe 58 des weiteren eine Feder 59 abgestützt, die auf ein Lager 57, mittels dem die beiden Bauteile 41 und 51 drehbar ineinander gelagert sind und vor dem ein Spritzring 60 angeordnet ist, einwirkt. Mittels in das Teil 54 stirnseitig eingearbeitete Gewindebohrungen 60' eingreifender Schrauben kann die Einrichtung 1' an einem Verbraucher befestigt werden.

An die Ringkammer 61, die in gleicher Weise ausgebildet ist wie bei der Ausgestaltung nach den Figuren 1 und 2, ist über den Dichtspalt 63 die Regelkammer 71 angeschlossen. Durch einen gleichsinnig mit den durch radial gerichtete Ansätze 64 und 65 teilweise gebildeten Dichtspalte 62 und 63 verstellbaren weiteren Dichtspalt 72 ist die Ringkammer 71 zu verschließen und zu öffnen.

Dazu sind an den Bauteilen 41 und 51 jeweils ein radial nach innen ragender Ansatz 73 bzw. ein radial nach außen ragender Ansatz 74 angebracht, die mit ihren einander zugekehrten axialen Stirnflächen zusammenwirken. Außerdem weist die Regelkammer 71 zwei einander gegeüberliegend angeordnete Ringflächen 75 und 76 auf, die von dem sich in der Regelkammer 71 aufbauenden Druck beaufschlagbar sind. Durch die auf die Ringflächen 75 und 76 einwirkenden Kräfte werden die Bauteile 41 und 51 derart auseinandergedrückt, daß die Dichtspalte 62, 63 und 72 geschlossen werden.

Bei einer Druckmittelübertragung wird durch die sich öffnenden Dichtspalte 62 und 63 Druckmittel austreten, das in einer Kammer 48 sowie in der Regelkammer 71 aufgefangen wird. In der Regelkammer 71 wird somit, da der Dichtspalt 72 aufgrund seiner Abmessung als Drossel wirkt, ein Druck aufgebaut, so daß durch die auf die Ringfläche 75 und 76 ausgeübten Druckkräfte der beiden Bauteile 41 und 51 auseinandergedrückt und die Dichtspalte 62, 63 und 72 wiederum mehr oder weniger geschlossen werden. Die beiden Bauteile 41 und 51 verstellen sich demnach in axialer Richtung ständig zueinander, die Spaltbreite der Dichtspalte 62, 63 und 72 pendelt sich demnach ein; bei geschlossenen Dichtspalten 62 und 63 wird nämlich der Druck in der Regelkammer 71 und damit die Gegenkraft abgesenkt, so daß die Dichtspalte 62 und 63 wiederum geöffnet werden.

Auch das aus dem Dichtspalt 72 austretende Druckmittel wird in einer Kammer 47 aufgefangen. Über Leitungen 49 und 50 wird das seitliche aus der Ringkammer 61 somit abströmende Druckmittel in einen Vorratsbehälter zurückgeführt. Außerdem sind die Dichtspalte 62, 63 und 72 jeweils auf einer Seite durch Scheiben 66, 67 und 77 aus einem Keramikwerkstoff begrenzt.

In Fig. 9a ist schematisch dargestellt, in welcher Weise die Einrichtung 1' nach Fig. 9 zu ergänzen ist, um Druckmittel in einem Zylinder, in dem ein beidseitig von Druckmittel beaufschlagbarer Kolben eingesetzt ist, einbringen zu können. Spiegelbildlich zu der Ringkammer 61 ist hierbei eine zweite Ringkammer 61' angeordnet, so daß die Regelkammer 71, die von den Dichtspalten 72 und 72' eingeschlossen ist, zwischen den beiden Ringkammern 61 und 61' liegt. Das aus zwei fest miteinander verbundenen Bauteilen bestehende äussere Bauteil 41, 41', in das die Leitungen 42 und 42' zur wechselweisen Zuführung des Druckmittels zu einer der Ringkammern 61, 61' eingearbeitet sind, ist mittels Lager 57 und 57' auf dem Bauteil 51 abgestützt, in dem eine weitere an einem Verbraucher angeschlossene Leitung 52' vorgesehen ist.

Eines der beiden Bauteile 41, 41' bzw. 51 ist bei dieser Ausgestaltung fest einzuspannen oder einzupressen, das andere Bauteil 51 bzw. 41, 41' sollte dagegen geringfügig axial verschiebbar sein, damit die Ringkammern 61, 61' sich einstellen können. Die Verstellbewegungen des axial verschiebbar angeordneten Bauteils werden von den Lagern 57, 57' aufgenommen.

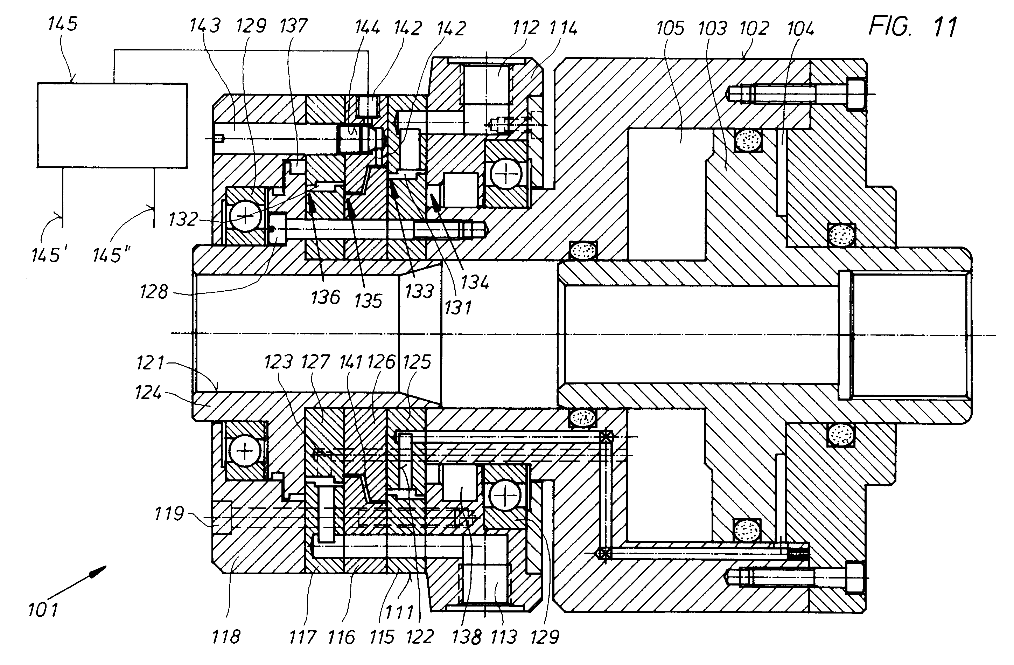

Die in Figur 11 dargestellte Druckmittelübertragungseinrichtung 101 in unmittelbar an einen Zylinder 102 angebaut, um wechselweise Druckmittel in die einem in den Zylinder 102 eingesetzten beidseitig von Druckmittel beaufschlagbaren Kolben 103 zugeordneten Druckräume 104 und 105 einbringen zu können. Die Druckmittelübertragungseinrichtung 101 besteht wiederum aus einem ersten ortsfest angeordneten Bauteil 111 und einem zweiten Bauteil 121, das mit dem Zylinder 102 fest verbunden ist. Bei diesem Ausführungsbeispiel ist das erste Bauteil 111 mit zwei Zuleitungen 112 und 113 ausgestattet, die in Ringkammern 131 und 132 münden, von denen das Druckmittel über in dem zweiten Bauteil 121 vorgesehene Leitungen 122 und 123 den Druckräumen 104 bzw. 105 zuströmen kann.

Zwischen den beiden Z-förmig gestalteten Ringkammern 131 und 132 ist eine Regelkammer 141 angeordnet, an die eine zu einem Steuergerät 145 führende Auslaßleitung 142 angeschlossen ist. Mittels eines in einer Gewindebohrung 144 eingesetzten Stellgliedes in Form einer Regelschraube 143 kann die maximal zulässige Menge des aus der Regelkammer 141 abstömenden Druckmittels eingestellt werden. Der abgeregelte Strom des Druckmittels wird in einem Steuergerät 145 durch ein elektronisch gesteuertes Mengenregelventil an die jeweiligen Betriebsbedingungen angepaßt. Über eine Steuerleitung 145' wird von einer Maschinensteuerung in das Steuergerät 145 der jeweilige Sollwert eingegeben, über eine Leitung 145'' wird die in dieser modifizierte Druckmittelmenge in einen Vorratsbehälter zurückgeführt.

Soll die Menge des abströmenden Druckmittels nicht variiert werden bzw. von der Maschinensteuerung nicht beeinflußbar sein, wird die Regelschraube 143 auf eine bestimmte Menge eingestellt. Das abströmende Druckmittel wird in diesem Fall unmittelbar in den Vorratsbehälter geleitet.

Über die der Regelkammer 141 benachbarten Dichtspalte 133 und 135 kann das aus den Ringkammern 131 bzw. 132 abströmende Druckmittel in die Regelkammer 141 und von dieser zu dem Steuergerät 145 gelangen. Das aus den äußeren Dichtspalten 134 und 136 abströmende Druckmittel wird dagegen in Ringkammern 137 und 138 aufgefangen und kann über nicht eingezeichnete Leitungen einem Vorratsbehälter zuströmen.

Das erste Bauteil 111 ist, um einen Zusammenbau der Einrichtung 101 zu ermöglichen, aus einem Lagerring 114, drei Scheiben 115, 116 und 117 sowie einem weiteren Lagerring 118 zusammengesetzt, die durch Schrauben 119 fest miteinander verbunden sind. Das zweite Bauteil 121 besteht aus einer Hülse 124 und drei Scheiben 125, 126 und 127, die mittels Schrauben 128 an dem Zylinder 102 befestigt sind. Über Wälzlager 129 sind die beiden Bauteile 111 und 121 drehbar ineinander gelagert. Auf diese Weise ist eine kompakte auf einfache Weise herzustellende und zu montierende Druckmittelübertragungseinrichtung 101 geschaffen.

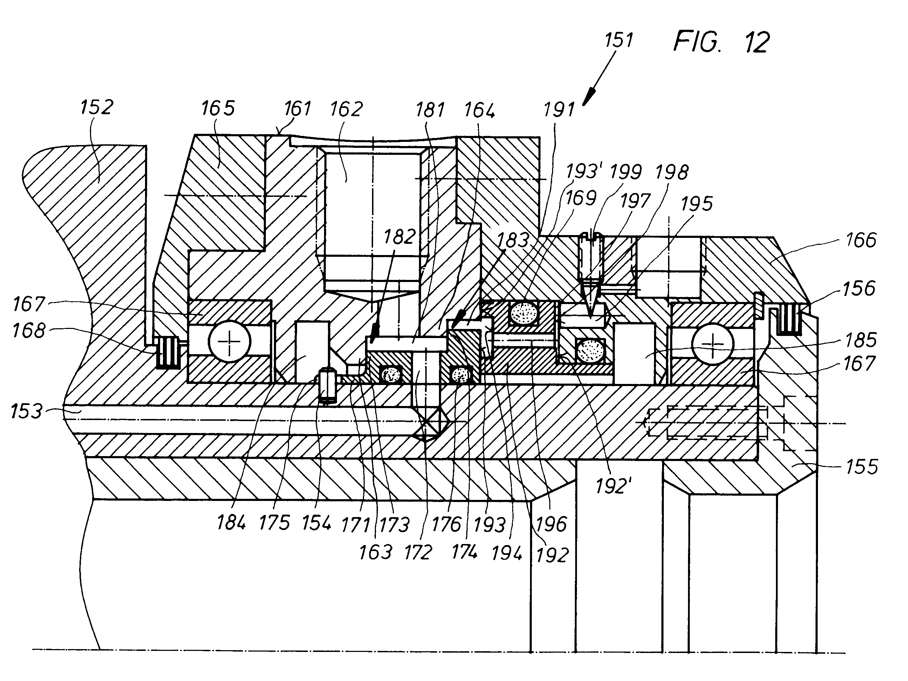

Bei der Einrichtung 151 nach Figur 12, die aus einem ortsfest angeordneten ersten Bauteil 161 und einem drehfest mit einer Nabe 152 eines Verbrauchers verbundenen zweiten Bauteil 171 besteht, ist an eine zwischen diesen vorgesehene Ringkammer 181 eine Regelkammer 191 angeschlossen, die durch einen axial verstellbar angeordneten Kolben 192 begrenzt ist. Über eine Auslaßleitung 195, die in Form von Drosselbohrungen 196 durch den Kolben 192 hindurchgeführt ist, ist die aus der Regelkammer 191 abströmende Druckmittelmenge ebenfalls regelbar. Dazu ist eine in die Auslaßleitung 195 eingreifende Stellschraube 199 vorgesehen, mittels der die aus der Regelkammer 191 abströmende Druckmittelmenge eingestellt werden kann.

Über eine in das erste Bauteil 161 eingearbeitete Leitung 162 wird das zu übertragende Druckmittel der Ringkammer 181 zugeführt, von der dieses über eine in das zweite Bauteil 171 vorgesehene Leitung 172 in eine in die Nabe 152 eingearbeitete Leitung 153 übertreten kann. Das zweite mit Dichtungen 176 versehene Bauteil 171 ist hierbei mittels eines an der Nabe 152 angebrachten Stiftes 154, der in einen Schlitz 175 eingreift, drehfest aber axial verschiebbar gehalten. Über mit dem ersten Bauteil 161 fest verbundene Ringe 165 und 166 sowie in diese eingesetzte Wälzlager 167 ist die Nahe 152 drehbar in dem ersten Bauteil 161 gelagert. Mittels Labyrinthringen 168 und 156, die unmittelbar in die Nabe 152 bzw. einen an dieser befestigten Abschlußdeckel 155 gehalten sind, ist die Druckmittelübertragungseinrichtung 152 abgedichtet.

Wird der Ringkammer 181 Druckmittel zugeführt, so werden die beiden Dichtspalte 182 und 183, sobald in der Ringkammer 181 ein Druck aufgebaut ist, gemeinsam geöffnet, da durch die auf die axial gerichteten Flächen der Ringkammer 181 ausgeübten Kräfte die beiden Bauteile 161 und 171 auseinandergedrückt werden. Die in Ausgangslage aneinander anliegenden Schultern 163 und 173 bzw. 164 und 174 der beiden Bauteile 161 und 171 werden dabei voneinander abgehoben, Druckmittel kann somit durch die Dichtspalte 182 und 183 abströmen.

Das aus dem Dichtspalt 182 austretende Druckmittel wird in der Kammer 184 aufgefangen und in einen Vorratsbehälter zurückgeführt, das durch den Dichtspalt 183 austretende Druckmittel gelangt dagegen in die Regelkammer 191. Durch den sich in der Regelkammer 191 aufbauenden Druck werden die einander gegenüberliegend angeordneten groß bemessenen Stirnflächen 193 und 194 des zweiten Bauteils 171 sowie des Kolbens 192 beaufschlagt, so daß dieser nach rechts bis zur Anlage der Anschlagfläche 192' an dem Lager 167 verschoben wird. Durch den dadurch gebildeten Spalt zwischen dem zweiten Bauteil 171 und der diesem zugekehrten Stirnfläche des Kolbens 192 strömt nunmehr das Druckmedium in eine Auffangkammer 185 ab.

Gleichzeitig strömt aber auch Druckmedium über die Drosselbohrungen 196 in den Druckraum 197, so daß die Druckfläche 198 des Kolbens 192 beaufschlagt wird. Und da die Druckfläche 198 größer bemessen ist als die gegenüberliegende Fläche 194 des Kolbens 192, wird dieser zurückgeführt.

Der Spalt zwischen dem zweiten Bauteil 171 und dem Kolben 192 wird dadurch geschlossen, durch den sich in der Ringkammer 191 aufbauenden, auf die Fläche 193 einwirkenden Druck wird somit auch das zweite Bauteil 171 nach links verschoben und die Spaltbreite der Dichtspalte 182 und 183 wird wiederum auf einen Mindestwert zurückgeführt. Die kleinstmögliche Spaltbreite der Dichtspalte 182, 183 ist hierbei durch Anlegen der Anschlagfläche 193' des Kolbens 192 an dem ersten Bauteil 161 definiert.

Das zweite Bauteil 171 sowie der Kolben 192 führen somit ständig, je nach den in der Regelkammer 191 und dem Druckraum 197 herrschenden Drücken, Öffnungs- und Schließbewegungen aus. Mittels der Einstellschraube 199 ist dabei der Druckaufbau in dem Druckraum 197 und in der Regelkammer 191 beeinflußbar, so daß die Menge des aus den Dichtspalten 182 und 183 abströmenden Druckmittels einstellbar ist.

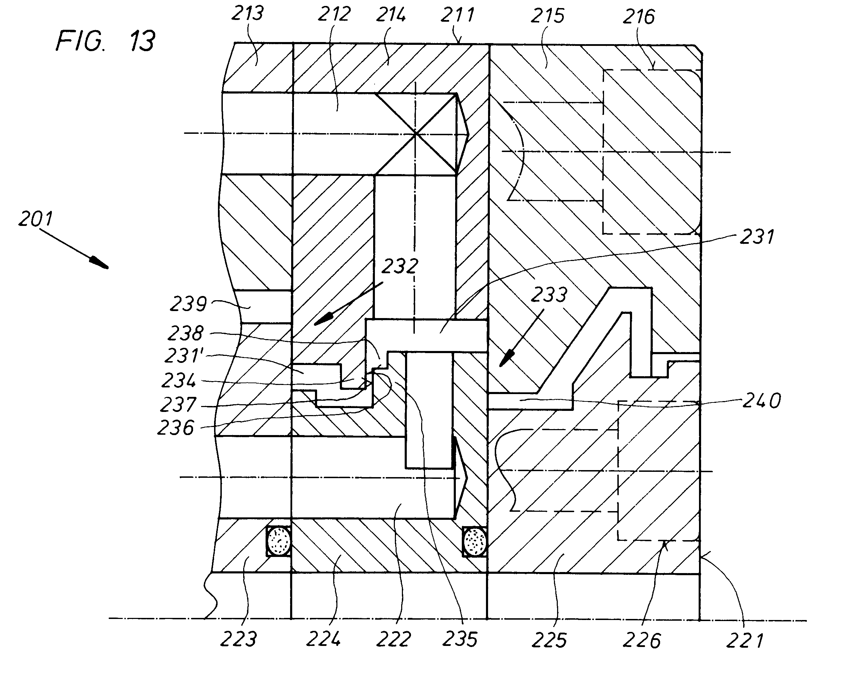

Bei der Übertragungseinrichtung 201 nach Figur 13 sind das erste Bauteil 211 sowie das zweite Bauteil 221 jeweils durch drei Scheiben 213, 214 und 215 bzw. 223, 224 und 225, die durch Schrauben 216 bzw. 226 zusammengehalten werden, zusammengesetzt. Zwischen den beiden Bauteilen 211 und 221 ist wiederum eine Ringkammer 231 vorgesehen, der das zu übertragende Druckmedium über eine Leitung 212 zuströmt und über eine Leitung 222 einem Verbraucher zugeführt wird.

Durch im Bereich der Ringkammer 231 angeordnete Anschläge ist hierbei der axiale Verstellweg der beiden Bauteile 211 und 221 zueinander begrenzt. Die Spaltbreite der beiden neben der Ringkammer 231 vorgesehenen Dichtspalte 232 und 233 kann auf diese Weise auf einen maximalen Wert eingestellt werden.

Zur Bildung von zusammenwirkenden Anschlagflächen 236 und 237 sind an der Scheibe 214 ein radial nach innen gerichteter Vorsprung 234 und an der Scheibe 215 eine Schulter 235 vorgesehen, die mit einem der maximal einstellbaren Breite der Dichtspalte 232 und 233 entsprechenden axialen Abstand zueinander angeordnet sind. Die beiden Bauteile 211 und 221 können somit nur bis zur Anlage der Anschlagflächen 236 und 237 aneinander axial verschoben werden. Und um eine Axialverschiebung zu bewerkstelligen, ist die Schulter 235 mit einer seitlich offenen Freisparung 238 versehen.

Wird der Ringkammer 231 Druckmittel zugeführt, so werden die beiden Bauteile 211 und 221, da diese im Bereich der Freisparung 238 von Druckmittel beaufschlagt sind, auseinandergeschoben, die Dichtspalten 232 und 233 werden nahezu geschlossen. Dieser Betriebszustand ist in Figur 13 dargestellt. Da sich jedoch in den Dichtspalten 232 und 233 sowie in dem mit 231' bezeichneten Teil der Ringkammer 231 nunmehr ein Druck aufbaut, werden die Bauteile 211 und 221 wiederum zusammengeschoben, und zwar bis zur Anlage der Anschlagflächen 236 und 237 aneinander. Das Druckmittel strömt somit durch die Dichtspalte 232 und 233 in Kammern 239 und 240 ab. Durch das Abströmen wird aber auch der Druck in dem Teil 231' der Ringkammer 231 abgesenkt, die Bauteile 211 und 221 werden erneut auseinandergeschoben. Die Dichtspalten 232 und 233 werden somit ständig mehr oder weniger geschlossen und geöffnet, so daß ein selbsttätiges Einstellen der Breite der Dichtspalten 232 und 233 bewerkstelligt wird.

## Patentansprüche

1. Einrichtung (1;1'; 101; 151; 201) zur Übertragung eines Mediums aus einem ortsfest angeordneten ersten Bauteil (11; 41; 111; 161; 211) in ein in diesem eingesetztes rotierend antreibbares zweites Bauteil (21; 51; 121; 171; 221), insbesondere zur Überführung eines Druckmittels von einem Drehverteiler in einen Hohlspannzylinder, wobei zwischen den beiden Bauteilen (11, 21; 41, 51; 111 121; 161; 171; 211; 221) eine Ringkammer (31; 61; 131, 132; 181; 231), an die eine Zuführungsleitung (12; 42; 112, 113; 162; 212) sowie eine zu einem Verbraucher führende Leitung (22; 52; 122, 123; 172; 222) für das zu übertragende Medium angeschlossen sind und beiderseits der Ringkammer (31; 61; 131, 132; 121; 231) ein radial gerichteter Dichtspalt (32, 33: 62, 63; 132, 133, 134, 135; 162, 163; 232, 233) vorgesehen ist,
**dadurch gekennzeichnet,**
daß die Ringkammer (31; 61; 131, 132; 181; 231) in axialer Richtung auf der einen Seite ganz oder teilweise von dem ersten Bauteil (11; 41; 111; 161, 164; 211) und auf der anderen Seite ganz oder teilweise von dem zweiten Bauteil (21; 51; 121; 171, 174; 222) begrenzt ist, daß die beiden Bauteile (11; 21; 41, 51; 111; 121; 161; 171; 211; 221) jeweils eine in sich starre Baueinheit bilden, und daß der eine Dichtspalt (32; 62; 134, 135; 182; 233) von außen durch das erste Bauteil (21; 41; 111; 161; 163; 211) und von innen durch das zweite Bauteil (21; 51; 121; 171, 173; 221) und der andere Dichtspalt (33; 63; 133; 136; 183; 232) von außen durch das zweite Bauteil (21; 51; 121; 171, 174; 221) und von innen durch das erste Bauteil (11; 41; 111; 161, 164; 211) begrenzt sind, derart, daß beide Dichtspalte (32, 33; 62, 63; 132, 133, 134, 135; 182, 183; 232, 233) durch eine axial gerichtete Relativverstellung der beiden Bauteile (11; 21; 41, 51; 111; 121; 161; 171; 211, 221) zueinander gleichsinnig veränderbar sind.

2. Einrichtung nach Anspruch 1,
**dadurch gekennzeichnet,**
daß zur Einstellung der Spaltbreite der beiden Dichtspalte (62, 63; 132, 133, 134, 135; 182, 183) der Ringkammer (61; 131, 132; 181) an diese über einen der Dichtspalte (63; 133, 135; 183) eine mit zwei axial einander gegenüberliegenden von dem zu übertragenden Medium beaufschlagbaren Flächen (75, 76; 193, 194) versehene Regelkammer (71; 141; 191) angeschlossen ist, die zwischen den beiden Bauteilen (41; 51; 111; 121; 161; 171) angeordnet ist.

3. Einrichtung nach Anspruch 2,
**dadurch gekennzeichnet,**
daß die Regelkammer (71) durch einen radial gerichteten Dichtspalt (72) abgeschlossen ist, der gleichsinnig mit den Dichtspalten (62, 63) der Ringkammer (61) veränderbar ist.

4. Einrichtung nach Anspruch 2 oder 3,
**dadurch gekennzeichnet,**
daß die Regelkammer (71) zwischen zwei an den beiden Bauteilen (41; 51) angeformten radial nach innen und außen abstehenden Ansatzstücken (73, 74) vorzugsweise in Form eines "Z" angeordnet ist.

5. Einrichtung nach einem oder mehreren der Ansprüche 2 bis 4,
**dadurch gekennzeichnet,**
daß an die Regelkammer (141; 181) eine mit einem einstellbaren Absperrglied (143; 199) versehene Auslaßleitung (142; 195) angeschlossen ist.

6. Einrichtung nach Anspruch 2 oder 5,
**dadurch gekennzeichnet,**
daß die Regelkammer (191) durch einen axial verstellbaren von dem zu übertragenden Medium beaufschlagbaren Kolben (192) eingeschlossen ist, der unabhängig von den beiden Bauteilen (161; 71) verstellbar und dessen Verstellweg durch Anschläge (92', 92'') begrenzt ist.

7. Einrichtung nach Anspruch 5 oder 6,
**dadurch gekennzeichnet,**
daß die Auslaßleitung (195) in Form einer oder mehrerer Drosselbohrungen (196) durch den Kolben (142) hindurchgeführt ist und daß der Kolben (192) auf der der Regelkammer (191) gegenüberliegenden Seite mit einer von dem abströmenden Medium beaufschlagbaren Druckfläche (198) versehen ist.

8. Einrichtung nach einem oder mehreren der Ansprüche 2 bis 6,
**dadurch gekennzeichnet,**
daß die Regelkammer (71; 141) zwischen zwei zur wechselweisen Übertragung eines Mediums vorgesehene Ringkammern (61, 61'; 131, 132) angeordnet ist.

9. Einrichtung nach Anspruch 8,
**dadurch gekennzeichnet,**
daß die beiden Ringkammern (61, 61'; 131, 132) spiegelbildlich zueinander oder in Reihe hintereinander angeordnet sind.

10. Einrichtung nach einem oder mehreren der Ansprüche 1 bis 9,
**dadurch gekennzeichnet,**
daß die Ringkammer (31; 61; 131, 132) in Form eines "Z" ausgebildet ist.

11. Einrichtung nach einem oder mehreren der Ansprüche 1 bis 10,
**dadurch gekennzeichnet,**
daß das erste Bauteil (11; 41) einen radial nach innen in die Ringkammer (31; 61) ragenden Ansatz (34; 64), mit dem zur Bildung des einen Dichtspaltes (33; 63) das zweite Bauteil (21; 51) zusammenwirkt, und das zweite Bauteil (21; 52) einen radial nach außen gerichteten Ansatz (35; 65), mit dem zur Bildung des anderen Dichtspaltes (32; 62) das erste Bauteil (11; 41) zusammenwirkt, aufweisen.

12. Einrichtung nach Anspruch 10 oder 11,
**dadurch gekennzeichnet,**
daß einer oder beide der die Ringkammer (31) begrenzenden Ansätze (34, 35) mit einem radial gerichteten Ansatzstück (36, 37; 36', 37'; 36'', 37'') versehen sind.

13. Einrichtung nach einem oder mehreren der Ansprüche 10 bis 12,
**dadurch gekennzeichnet,**
daß die in axialer Richtung beaufschlagten Flächen (F₁, F₂) der Ansätze (34, 35) und Ansatzstücke (36, 37) jeweils gleich groß bemessen und auf den gleichen Durchmesserbereichen wie die beiden Dichtspalte (32', 33') angeordnet sind.

14. Einrichtung nach einem oder mehreren der Ansprüche 10 bis 12,
**dadurch gekennzeichnet,**
daß die beiden Dichtspalte (32'', 33''; 32''', 33''') auf unterschiedlichen Durchmesserbereichen angeordnet und unterschiedlich lang bemessen sind.

15. Einrichtung nach einem oder mehreren der Ansprüche 1 bis 14,
**dadurch gekennzeichnet,**
daß zur Einstellung der Spaltbreite der beiden Dichtspalte (32, 33) das erste Bauteil (11) mit dem zweiten Bauteil (21) über ein zwischen diesen eingesetztes Lager (27) verspannt ist, oder daß zumindest eines der Bauteile (11; 21; 41; 51) durch eine den axialen Verstellbewegungen entgegenwirkende Feder (59) abgestützt ist.

16. Einrichtung nach einem oder mehreren der Ansprüche 1 bis 14,
**dadurch gekennzeichnet,**
daß zur Einstellung der Spaltbreite der beiden Dichtspalte (32, 33; 232, 233) der Ringkammer (31; 231) der axiale Verstellweg der beiden Bauteile (11, 12; 211, 221) zueinander durch Anschläge (34, 36; 234, 235) begrenzt ist.

17. Einrichtung nach Anspruch 16,
**dadurch gekennzeichnet,**
daß einer der Anschläge durch einen in eines der Bauteile (21) innerhalb der Ringkammer (31) eingesetzten Hebel (40), einen Stift oder dgl. gebildet ist, der mit dem anderen Bauteil (11), beispielsweise mit dem an diesem angeformten Ansatz (34), zusammenwirkt.

18. Einrichtung nach Anspruch 16,
**dadurch gekennzeichnet,**
daß die Anschläge durch einen an dem einen Bauteil (211) im Bereich der Ringkammer (231) angeformten radial nach innen oder außen abstehenden Vorsprung (234) und einer an dem anderen Bauteil (221) vorgesehene Schulter (235) gebildet sind, die mit einem der maximal einstellbaren Breite der Dichtspalte (232, 233) entsprechenden axialen Abstand zueinander angeordnet sind.

19. Einrichtung nach Anspruch 18,
**dadurch gekennzeichnet,**
daß zur Erzeugung einer axialen Relativverstellung der beiden Bauteile (211, 221) zueinander die Schulter (235) mit einer seitlich offenen Freisparung (238) versehen ist.

20. Einrichtung nach einem oder mehreren der Ansprüche 1 bis 19,
**dadurch gekennzeichnet,**
daß das erste und/oder das zweite Bauteil (11; 21; 111; 121) ganz oder teilweise aus zwei oder mehreren axial hintereinander angeordneten Scheiben (12, 13, 14, 15, 23, 24, 25; 114, 115, 116, 117, 125, 126, 127) zusammengesetzt sind, die fest, beispielsweise durch Schrauben (16; 26; 119; 128), miteinander verbunden sind.

21. Einrichtung nach einem oder mehreren der Ansprüche 1 bis 20,
**dadurch gekennzeichnet,**
daß einer oder beide der Dichtspalte (32', 33'; 62, 63), der Ringkammer (31'; 61) und/oder der Dichtspalt (72) der Regelkammer (71) zumindest auf einer Seite durch einen an den Bauteilen (11; 21; 41; 51) angebrachten reibfesten Belag, beispielsweise durch in diese eingesetzte Ringe (38, 39; 66, 67, 77) aus einem Keramikwerkstoff, begrenzt sind.

## Claims

1. An arrangement (1; 1'; 101; 151; 201) for transferring a medium from a fixedly arranged first component (11; 41; 111; 161; 211) into a second component (21; 51; 121; 171; 221) inserted into the first and which can be driven so as to rotate, in particular for transferring a pressurized medium from a rotary distributor into a hollow clamping cylinder, with an annular chamber (31; 61; 131, 132; 181; 231) arranged between the two components (11, 21; 41, 51; 111, 121; 161; 171; 211; 221) and a supply line (12; 42; 112, 113; 162; 212) and a line (22; 52; 122, 123; 172; 222) for the medium to be transferred which leads to a consumer being connected to the annular chamber (31; 61; 131, 132; 181; 231), on both sides of which is fitted a radially arranged seal gap (32, 33; 62, 63; 132, 133, 134, 135; 162, 163; 232, 233),
**characterized in that,**
the annular chamber (31; 61; 131, 132; 181; 231) is axially delimited on one side in whole or in part by means of the first component (11; 41; 111; 161, 164; 211) and on the other side in whole or in part by the second component (21; 51; 121; 171, 174; 222), that both components (11; 21; 41, 51; 111; 121; 161; 171; 211; 221) each form a rigid unit in themselves, and that the one seal gap (32; 62; 134, 135; 182; 233) is delimited from the outside by the first component (21; 41; 111; 161; 163; 211) and from the inside by the second component (21; 51; 121; 171, 173; 221) and the other seal gap (33; 63; 133; 136; 183; 232) is delimited from the outside by the second component (21; 51; 121; 171, 174; 221) and from the inside by the first component (11; 41; 111; 161, 164; 211) in such a way that both seal gaps (32, 33; 62, 63; 132, 133, 134, 135; 182, 183; 232, 233) can be adjusted relative to one another in the same manner if both components (11; 21; 41, 51; 111; 121; 161; 171; 211, 221) are moved in an axial direction in relation to one another.

2. The arrangement in accordance with Claim 1,
**characterized in that,**
in order to set the width of the gap of both gap seals (62, 63; 132, 133, 134, 135; 182, 183) of the annular chamber (61; 131, 132; 181), a regulating chamber (71; 141; 191) is connected to the aforementioned annular chamber by means of one of the seal gaps (63; 133, 135; 183), with the aforementioned regulating chamber having two surfaces (75, 76; 193, 194) positioned axially opposite to one another upon which the medium to be transferred can act, and the regulating chamber (71; 141; 191) arranged between the two components (41; 51; 111; 121; 161; 171).

3. The arrangement in accordance with Claim 2,
**characterized in that,**
the regulating chamber (71) is sealed by a radially arranged seal gap (72) which can be modified in the same manner as the seal gaps (62, 63) of the annular chamber (61).

4. The arrangement in accordance with Claim 2 or Claim 3,
**characterized in that,**
the regulating chamber (71) is arranged between two radial extensions (73, 74) produced on both components (41; 51) which project inwardly and outwardly and, in a preferred embodiment, is arranged in the shape of a "Z".

5. The arrangement in accordance with one or more of Claims 2 to 4,
**characterized in that,**
an outlet line (142; 195) which has an adjustable shut-off element (143; 199) is connected to the regulating chamber (141; 181).

6. The arrangement in accordance Claim 2 or Claim 5,
**characterized in that,**
the regulating chamber (191) is enclosed by a piston (192) which can be moved axially and acted upon by the medium to be transferred, and which can be moved independently of the two components (161; 171) and whose degree of travel is restricted by stops (192', 193').

7. The arrangement in accordance with Claim 5 or Claim 6,
**characterized in that,**
the outlet line (195) passes through the piston (192) in the form of one or more throttle bores (196), and that the piston (192) has a pressure surface (198) on its opposite side to the regulating chamber (191) which can be acted upon by the medium flowing out.

8. The arrangement in accordance with one or more of Claims 2 to 6,
**characterized in that,**
the regulating chamber (71; 141) is arranged between two annular chambers (61, 61'; 131, 132) which are provided in order to transfer a medium in a reciprocating manner.

9. The arrangement in accordance with Claim 8,
**characterized in that,**
both annular chambers (61, 61'; 131, 132) are located in a mirror-image arrangement to one another or are positioned in series one after the other.

10. The arrangement in accordance with one or more of Claims 1 to 9,
**characterized in that,**
the annular chamber (31; 61; 131, 132) is formed in the shape of a "Z".

11. The arrangement in accordance with one or more of Claims 1 to 10,
**characterized in that,**
the first component (11; 41) has a projection (34; 64) which points radially inwards into the annular chamber (31; 61) with the second component (21; 51) operating in conjunction with the aforementioned projection in order to create one of the seal gaps (33; 63), and the second component (21; 52) having a projection (35; 65) which points radially outwards and the first component (11; 41) operating in conjunction with the projection (35; 65) in order to create the other seal gap (32; 62).

12. The arrangement in accordance with Claim 10 or Claim 11,
**characterized in that,**
one or both of the projections (34, 35) which delimit the annular chamber (31) is provided with an extension (36, 37; 36', 37'; 36'', 37'') which are arranged radially.

13. The arrangement in accordance with one or more of Claims 10 to 12,
**characterized in that,**
the surfaces (F₁, F₂) of projections (34, 35) and extensions (36, 37) which are acted upon in an axial direction are of equal dimensions and are arranged in the same diameter ranges as the two seal gaps (32', 33').

14. The arrangement in accordance with one or more of Claims 10 to 12,
**characterized in that,**
the two seal gaps (32'', 33''; 32''', 33''') are arranged in different diameter ranges and are of different lengths.

15. The arrangement in accordance with one or more of Claims 1 to 14,
**characterized in that,**
in order to set the gap width of the two seal gaps (32, 33), the first component (11) is clamped together with the second component (21) by means of a bearing (27) which is mounted between the aforementioned two components, or that at least one of the components (11; 21; 41; 51) is supported by means of a spring (59) which acts against the axial movements.

16. The arrangement in accordance with one or more of Claims 1 to 14,
**characterized in that,**
in order to adjust the gap width of the two seal gaps (32, 33; 232, 233) of the annular chamber (31; 231), the axial movement range of the two components (11, 12; 211, 221) in relation to one another is restricted by means of stops (34, 36; 234, 235).

17. The arrangement in accordance with Claim 16,
**characterized in that,**
one of the stops is formed by means of a lever (40), pin or the like inserted into one of the components (20) within the annular chamber (31), with this lever (40), pin or the like acting in conjunction with the other component (11), for example with the projection (34) formed onto the aforementioned component (11).

18. The arrangement in accordance with Claim 16,
**characterized in that,**
the stops are produced by an outward or inward pointing salient (234) formed onto the one component (211) in the area of the annular chamber (231) and by a shoulder (235) provided on the other component (221), with the salient (234) and the shoulder (235) being arranged in relation to one another at an axial distance corresponding to the maximum width that can be set on the seal gap (232, 233).

19. The arrangement in accordance with Claim 18,
**characterized in that,**
in order to adjust the two components (211, 221) axially in relation to one another, the shoulder (235) has a notch (238) which is open to the side.

20. The arrangement in accordance with one or more of Claims 1 to 19,
**characterized in that,**
the first and/or the second component (11; 21; 111; 121) is composed in whole or in part of two or more disks (12, 13, 14, 15, 23, 24, 25; 114, 115, 116, 117, 125, 126, 127) arranged axially one after the other and which are connected together in a fixed arrangement, for example by means of screws (16; 26; 119; 128).

21. The arrangement in accordance with one or more of Claims 1 to 20,
**characterized in that,**
one or both of the seal gaps (32', 33'; 62, 63), the annular chamber (31', 61) and/or the seal gap (72) of the regulating chamber (71) are restricted on at least one side by means of a friction-resistant lining which is attached to the components (11; 21; 41; 51), for example by means of rings (38, 39; 66, 67, 77) made of a ceramic material and inserted into the aforementioned components (11; 21; 41; 51).

## Revendications

1. Dispositif (1; 1'; 101; 151; 201) pour transférer un milieu à partir d'un premier composant stationnaire (11; 41; 111; 161; 211) vers un deuxième composant (21; 51; 121; 171; 221) entraîné en rotation, qui y est inséré, notamment pour transférer un milieu sous pression à partir d'un distributeur rotatif dans un cylindre de serage creux, avec, entre les deux composants (11, 21; 41, 51; 111; 121; 161; 171; 211; 221), une chambre annulaire (31; 61; 131, 132; 181; 231) sur laquelle est branchée pour transférer le milieu, une conduite d'arrivée (12; 42; 112, 113; 162; 212) ainsi qu'une conduite (22; 52; 122, 123; 172; 222) menant vers un consommateur, et avec, de part et d'autre de la chambre annulaire (31; 61; 131, 132; 181; 231), une fente d'étoupage radiale (32, 33; 62, 63; 132, 133, 134, 135; 162, 163; 232, 233),
caractérisé en ce que,
en direction axiale, la chambre annulaire (31; 61; 131, 132; 181; 231) est limitée sur un coté, intégralement ou partiellement, par le premier composant (11; 41; 111; 161; 164; 211), et de l'autre côté, intégralement ou partiellement, par le deuxième composant (21; 51; 121; 171, 174; 221), que les deux composants (11; 21; 41, 51; 111; 121; 161; 171; 211; 221) forment respectivement une unité rigide en soi, et que la première fente d'étoupage (32; 62; 134, 135; 182; 233) est limitée, de l'extérieur, par le premier composant (11; 41; 161; 163; 211), et, de l'intérieur, par le deuxième composant (21; 51; 121; 171, 173; 221), tandis que la deuxième fente d'étoupage (33; 63; 133; 136; 183; 232) est limitée, de l'extérieur, par le deuxième composant (21; 51; 121; 171; 174; 221), et, de l'intérieur, par le premier composant (11; 41; 111; 161; 164; 211), de sorte que les deux fentes d'étoupage (32, 33; 62, 63; 132, 133, 134, 135; 182, 183; 232, 233) se laissent varier dans le même sens l'une par rapport à l'autre, moyennant un déplacement axial relatif des deux composants (11; 21; 41, 51; 111; 121; 161; 171; 211, 221).

2. Dispositif d'après la revendication 1,
caractérisé en ce que
pour le réglage de la largeur des deux fentes d'étoupage (62, 63; 132, 133, 134, 135; 182, 183) de la chambre annulaire (61; 131, 132; 181), il soit prévu sur celle-ci, au-dessus d'une des fentes d'étoupage (63; 133, 135; 183), une chambre de régulation (71; 141; 191) qui est munie de deux faces opposées axialement et soumises à l'effet du milieu à transférer, et qui est agencée entre les deux composants (41; 51; 111; 121; 161; 171).

3. Dispositif d'après la revendication 2,
caractérisé en ce que
la chambre de régulation (71) est obturée par une fente d'étoupage radiale (72) qui se laisse varier dans le même sens que les fentes d'étoupage (62, 63) de la chambre annulaire (61).

4. Dispositif d'après la revendication 2 ou 3,
caractérisé en ce que
la chambre de régulation (71) est disposée entre deux embouts (73, 74), de préférence sous forme d'un Z, formés sur les deux composants (41; 51) et saillant radialement vers l'intérieur et l'extérieur.

5. Dispositif d'après une ou plusieurs des revendications 2 à 4,
caractérisé en ce que,
sur la chambre de régulation (141; 181), il soit branché une conduite de sortie (142; 195) munie d'un organe de barrage réglable (143; 199).

6. Dispositif d'après la revendication 2 ou 5,
caractérisé en ce que
la chambre de régulation (191) est enfermée par un piston axialement réglable (192), qui est assujetti à l'action du milieu à transférer et dont la régulation est indépendante des deux composants (161; 71) et dont la course de réglage est limitée par des butées (92', 92'').

7. Dispositif d'après la revendication 5 ou 6,
caractérisé en ce que
la conduite de sortie (195) sous forme d'un ou de plusieurs alésages d'étranglement (196) mène à travers le piston (142) et que, sur la face opposée à la chambre de régulation (191), le piston (192) est muni d'une face de pression (198) assujetti au milieu s'écoulant.

8. Dispositif d'après une ou plusieurs des revendications 2 à 6,
caractérisé en ce que
la chambre de régulation (71; 141) est disposée entre deux chambres annulaires (61, 61'; 131, 132) prévues pour transférer alternativement un milieu.

9. Dispositif d'après la revendication 8,
caractérisé en ce que
les deux chambre annulaires (61, 61'; 131, 132) sont disposées soit en position réfléchie soit d'affilée.

10. Dispositif d'après une ou plusieurs des revendications 1 à 9,
caractérisé en ce que
la chambre annulaire (31; 61; 131, 132) est conçue sous forme d'un "Z".

11. Dispositif d'après une ou plusieurs des revendications 1 à 10,
caractérisé en ce que
le premier composant (11; 41) comprend un embout (34; 64) saillant radialement vers l'intérieur dans la chambre annulaire (31; 61), avec lequel le deuxième composant (21; 52) collabore pour former l'une des fentes d'étoupage (33; 63), et que le deuxième composant (21; 52) comprend un embout (35; 65) saillant radialement vers l'extérieur, avec lequel le premier composant (11; 42) collabore pour former l'autre fente d'étoupage (32; 62).

12. Dispositif d'après la revendication 10 ou 11,
caractérisé en ce que
l'un ou les deux des embouts (34, 35) limitant la chambre annulaire (31) sont munis d'un élément (36, 37; 36', 37; 36'', 37'').

13. Dispositif d'après une ou plusieurs des revendications 10 à 12,
caractérisé en ce que
les faces (F₁, F₂) assujetties en direction axiale des embouts (34, 35) et des éléments (36, 37) ont les mêmes dimensions et qu'elles soient disposées sur les mêmes sections que les deux fentes d'étoupage (32', 33').

14. Dispositif d'après une ou plusieurs des revendications 10 à 12,
caractérisé en ce que
les deux fentes d'étoupage (32'', 33''; 32''', 33''') sont disposées sur diverses sections et qu'elles ont des longueurs différentes.

15. Dispositif d'après une ou plusieurs des revendications 1 à 14,
caractérisé en ce que
pour le réglage de la largeur des deux fentes d'étoupage (32, 33), le premier composant (11) est serré au deuxième composant (21) par l'intermédiaire d'un palier intercalé (27) ou bien qu'au moins un des composants (11; 21; 41; 51) est soutenu par un ressort (59) s'opposant aux mouvements axiaux.

16. Dispositif d'après une ou plusieurs des revendications 1 à 14,
caractérisé en ce que
pour le réglage de la largeur des deux fentes d'étoupage (32, 33; 232, 233) de la chambre annulaire (31; 231), le déplacement axial des deux composants (11, 12; 211, 221) l'un par rapport à l'autre est limité par des butées (34, 36; 234, 235).

17. Dispositif d'après la revendication 16,
caractérisé en ce que
l'une des butées est conçue sous forme d'un levier (40), d'un goujon ou d'un organe semblable, inséré dans un des composants (21) à l'intérieur de la chambre annulaire (31) et collaborant avec l'autre composant (11), par exemple par l'intermédiaire d'un embout (34) qui y est forme.

18. Dispositif d'après la revendication 16,
caractérisé en ce que
les butées sont formées par une saillie (234) prévue sur un des composants (211) à l'endroit de la chambre annulaire (231) et saillant radialement vers l'intérieur ou l'extérieur, et d'une épaule (235) prévue sur l'autre composant (221), les deux étant espacées axialement à un distance correspondant à la largeur maxi réglable des fentes d'étoupage (232, 233).

19. Dispositif d'après la revendication 18,
caractérisé en ce que
pour réaliser le mouvement axial relatif entre les deux composants (211, 221), l'épaule (235) est pourvue d'un évidement (238) ouvert latéralement.

20. Dispositif d'après une ou plusieurs des revendications 1 à 19,
caractérisé en ce que
le premier et/ou le deuxième composant (11; 21; 111; 121) se composent intégralement ou partiellement de deux ou de plusieurs disques (12, 13, 14, 15, 23, 24, 25; 114, 115, 116, 117, 125, 126, 127) disposés axialement l'un derrière l'autre et liés rigidement, par exemple par des boulons (16; 26; 119; 128).

21. Dispositif d'après une ou plusieurs des revendications 1 à 20,
caractérisé en ce que
l'une ou les deux des fentes d'étoupage (32', 33'; 62, 63) de la chambre annulaire (31'; 61) et/ou la fente d'étoupage (72) de la chambre de régulation (71) sont limitées, au moins d'un côté, par une couche résistant au frottement, appliquée aux composants (11; 21; 41; 51), par exemple par des anneaux en matériau céramique (38, 39; 66, 67, 77) qui y sont insérés.
